# EUROPÄISCHE PATENTSCHRIFT

(11) **EP 3 547 876 B1**
(45) Veröffentlichungstag und Bekanntmachung des Hinweises auf die Patenterteilung: **13.05.2020**
(21) Anmeldenummer: 17808852.2
(22) Anmeldetag: 29.11.2017
(51) Int. Cl.: A47B 81/00, A47B 49/00

(54) **ECKSCHRANKBESCHLAG ZUR RADGESTEUERTEN BEWEGLICHEN LAGERUNG EINES TABLARS IN EINEM ECKSCHRANK**
FITTING FOR THE MOBILE POSITIONING OF A SHELF BOARD IN A CORNER CUPBOARD BY MEANS OF A ROLLING ELEMENT
FERRURE DESTINÉE AU LOGEMENT MOBILE COMMANDÉ PAR ROULEMENT D'UNE ÉTAGÈRE DANS UN ÉLÉMENT D'ANGLE

(30) Priorität: 29.11.2016 EP 16201262
(43) Veröffentlichungstag der Anmeldung: 09.10.2019
(73) Patentinhaber: Vauth-Sagel Holding GmbH & Co. KG, 33034 Brakel (DE)
(72) Erfinder: SAGEL, Claus, 33604 Bielefeld (DE); SAGEL, Thomas, 33024 Brakel (DE)
(74) Vertreter: REHBERG HÜPPE + PARTNER
(86) Internationale Anmeldenummer: PCT/EP2017/080758
(87) Internationale Veröffentlichungsnummer: WO 2018/099941

(56) Entgegenhaltungen:
- DE-T5-112011 102 299
- DE-U1-202015 102 233

## Beschreibung

### TECHNISCHES GEBIET DER ERFINDUNG

Die Erfindung bezieht sich auf einen Eckschrankbeschlag zur beweglichen Lagerung eines Tablars in einem Eckschrank.

Insbesondere bezieht sich die Erfindung auf einen solchen Eckschrankbeschlag mit einem Lagersockel, einem in einer ersten Schwenkbewegung um eine vertikale Schwenkachse verschwenkbar an dem Lagersockel gelagerten Tragarm, einem in einer zweiten Schwenkbewegung um eine zweite vertikale Schwenkachse verschwenkbar an dem Tragarm gelagerten Tablarträger und einem Getriebe, das die zweite Schwenkbewegung an die erste Schwenkbewegung koppelt.

### STAND DER TECHNIK

Der Begriff "Eckschrank" steht in dieser gesamten Beschreibung als Synonym für einen Schrank, dessen Innenraum nicht über seine gesamte Breite durch eine Türöffnung zugänglich ist, so dass Tablare, die zur Lagerung von Objekten in den Schrank einschiebbar und zum Zugriff auf die Objekte aus dem Schrank ausziehbar sind, nicht als einfache, sich über die gesamte Breite des Schranks erstreckende Schubladen ausgebildet werden können. Vielmehr muss ein Tablar, das sich über die wesentliche Breite eines solchen Schranks erstreckt, in einer nicht linearen Bewegung durch die Türöffnung geführt werden. Wenn sich diese nicht lineare Bewegung auf eine Schwenkbewegung des Tablars um eine vertikale Schwenkachse gegenüber einem in der vorderen Mitte des Eckschranks an einer Tragsäule abgestützten Lagersockel beschränkt, kann das jeweilige Tablar maximal zu knapp der Hälfte seiner Fläche durch die Türöffnung aus dem Eckschrank herausgeschwenkt werden. Um das Tablar noch weiter vor die Türöffnung herauszuführen, darf es nicht starr, sondern muss beweglich an einem um eine solche Schwenkachse verschwenkbaren Tragarm gelagert sein. Diese Beweglichkeit kann grundsätzlich eine horizontale Verfahrbarkeit und/oder eine zusätzliche Verschwenkbarkeit um eine zweite vertikale Schwenkachse gegenüber dem Tragarm umfassen. Die vorliegende Erfindung bezieht sich auf Beschläge, bei denen das Tablar um eine solche zweite vertikale Schwenkachse verschwenkbar an dem Tragarm gelagert ist, wobei diese Schwenkachse ortsfest an dem Tragarm angeordnet ist.

Wenn das Tablar beweglich an dem Tragarm gelagert ist, ist diese Bewegung an die Schwenkbewegung des Tragarms um die vertikale Schwenkachse in der vorderen Mitte des Eckschranks zu koppeln, damit das Tablar bei seiner Bewegung nicht mit dem Korpus des Eckschranks kollidiert. Hierzu sind verschiedene Ansätze bekannt.

Die DE 20 2004 011 200 U1 lehrt, das jeweilige Tablar zusätzlich über einen zweiten Tragarm abzustützen, der um eine dritte vertikale Schwenkachse verschwenkbar auf der der Tragsäule gegenüberliegenden Seite der Türöffnung gelagert ist und an dessen freien Ende das Tablar um eine vierte vertikale Schwenkachse verschwenkbar abgestützt ist. Die vierte vertikale Schwenkachse ist an der Unterseite des Tablars von der zweiten vertikalen Schwenkachse beabstandet, um die das Tablar verschwenkbar an dem freien Ende des ersten Tragarms abgestützt ist. Von den beiden Tragarmen abgestützt und geführt ist das Tablar in einer S-förmigen Bewegung aus dem Eckschrank durch die Türöffnung herausziehbar, wobei die maximal ausgezogene Position des Tablars teilweise seitlich neben dem Eckschrank liegt. Dies ist für die Zugänglichkeit der nicht vollständig aus dem Eckschrank herausziehbaren Teile des Tablars ungünstig. Zudem benötigt dieser bekannte Eckschrankbeschlag zusätzliche ausreichend stabile Abstützpunkte an der die Türöffnung begrenzenden Seitenwand des Eckschranks. Zudem ist die mögliche Fläche des Tablars verglichen mit der Grundfläche des Eckschranks insbesondere in der Mitte des Tablars, die um die vordere Kante der die Türöffnung begrenzenden Seitenwand herumzuführen ist und dazu eine Einschnürung aufweist, vergleichsweise klein.

Aus der DE 10 2006 055 806 A1 ist ein Eckschrankbeschlag bekannt, bei dem das jeweilige Tablar über zwei Tragarme abgestützt ist, die um in der vorderen Mitte des Eckschranks verlaufende vertikale Schwenkachsen verschwenkbar an einem einzigen Lagersockel gelagert sind. Dabei ist das Tablar nicht nur um zwei weitere Schwenkachsen verschwenkbar an den Tragarmen gelagert, sondern die Abstützpunkte des Tablars an die Tragarme sind auch längs der Tragarme beweglich. Dabei wird die Beweglichkeit der Anbindungspunkte längs der Tragarme durch Lenker und Kulissenbahnen umfassende Getriebe an die Schwenkbewegung der Tragarme um deren vertikale Schwenkachsen gekoppelt. Der bekannte Eckschrankbeschlag ist sehr komplex aufgebaut und durch die grundsätzlich vorhandenen Bewegungsfreiheitsgrade des Tablars gegenüber den Tragarmen wenig stabil in der Bewegungsführung. Zudem ist die mögliche Fläche des Tablars verglichen mit der Grundfläche des Eckschranks vergleichsweise klein. Sie beschränkt sich auf zwei aneinander grenzende Kreisflächen

Aus der EP 2 353 436 B1 und der DE 20 2015 102 233 U1 ist ein Eckschrankbeschlag mit den Merkmalen des Oberbegriffs des unabhängigen Patentanspruchs 1 bekannt. Ein Tragarm ist um eine erste ortsfeste vertikale Schwenkachse verschwenkbar an einem Lagersockel gelagert, der sich an einer vertikalen Tragsäule in der vorderen Mitte des Eckschranks abstützt. An dem Tragarm ist um eine zweite vertikale Schwenkachse verschwenkbar ein Tablarträger gelagert, an dem das Tablar befestigt ist. Ein Steuerhebel ist mit seinem einen Ende um eine weitere ortsfeste vertikale Schwenkachse verschwenkbar an dem Lagersockel und mit seinem anderen Ende verschwenkbar an einem nach hinten über die zweite vertikale Schwenkachse abstehenden Ausleger des Tablarträgers gelagert. Der Tragarm, der Lagersockel, der Steuerhebel und der Ausleger bilden ein Hebelgetriebe, das die Schwenkbewegung des Tablarträgers gegenüber dem Tragarm an die Schwenkbewegung des Tragarms gegenüber dem Lagersockel koppelt. Das auf dem Tablarträger befestigte Tablar wird damit in eine ausgezogene Stellung geführt, die weit überwiegend außerhalb des Eckschranks und vor dessen Türöffnung liegt. Verglichen mit der Grundfläche des jeweiligen Eckschranks fällt die mögliche Größe des Tablars auch bei diesem bekannten Eckschrankbeschlag jedoch vergleichsweise klein aus. Weiterhin kommt es wegen des geringen Abstands der ortsfesten vertikalen Schwenkachsen des Tragarms und des Steuerhebels zu hohen Kräften auf den Steuerhebel und dessen Lager.

Aus der DE 11 2011 102 299 T5 ist eine Vorrichtung zur Halterung eines Displays bekannt. Die Vorrichtung weist ein Basisteil, einen ersten Arm, der um eine erste vertikale Schwenkachse gegenüber dem Basisteil verschwenkbar ist, einen zweiten Arm, der gegenüber dem ersten Arm um eine zweite vertikale Schwenkachse verschwenkbar ist, und eine Displaybefestigungsklammer auf, die gegenüber dem zweiten Arm um eine dritte vertikale Schwenkachse verschwenkbar ist. Ein Schwenkbereich des ersten Arms gegenüber dem Basisteil und ein Schwenkbereich des zweiten Arms gegenüber dem ersten Arm sind jeweils durch Anschläge auf 180° beschränkt. Dabei ist eine Getriebeanordnung mit einem begrenzt auf 180° gegenüber dem Basisteil verdrehbaren ersten Zahnrad, einem Zahnriemen und einem starr an den zweiten Arm angekoppelten zweiten Zahnrad vorgesehen, die den zweiten Schwenkbereich, über den der zweite Arm gegenüber dem ersten Arm verschwenkbar ist, fest gegenüber dem Basisteil ausrichtet. Der zweite Arm ist als Parallellogrammlenkeranordnung ausgebildet, um die Displaybefestigungsklammer unter fester Ausrichtung zur Horizontalen höhenbeweglich an dem ersten Arm abzustützen.

### AUFGABE DER ERFINDUNG

Der Erfindung liegt die Aufgabe zugrunde, einen Eckschrankbeschlag zur beweglichen Lagerung eines Tablars in einem Eckschrank aufzuzeigen, der ein bezogen auf die Grundfläche des Eckschranks großes Tablar weit vor die Türöffnung des Eckschranks herausführt und dennoch von begrenzter Komplexität ist.

### LÖSUNG

Die Aufgabe der Erfindung wird durch einen Eckschrankbeschlag mit den Merkmalen des unabhängigen Patentanspruchs 1 gelöst. Die abhängigen Patentansprüche 2 bis 14 betreffen bevorzugte Ausführungsformen des erfindungsgemäßen Eckschrankbeschlags. Der Patentanspruch 15 ist auf einen Eckschrank mit einem erfindungsgemäßen Eckschrankbeschlag und einem an dessen Tablarträger befestigten Tablar gerichtet.

### BESCHREIBUNG DER ERFINDUNG

Bei einem erfindungsgemäßen Eckschrankbeschlag zur beweglichen Lagerung eines Tablars in einem Eckschrank, wobei der Eckschrankbeschlag einen Lagersockel, einen in einer ersten Schwenkbewegung um eine erste vertikale Schwenkachse verschwenkbar an dem Lagersockel gelagerten Tragarm, einen in einer zweiten Schwenkbewegung um eine zweite vertikale Schwenkachse verschwenkbar an dem Tragarm gelagerten Tablarträger und ein Getriebe aufweist, das die zweite Schwenkbewegung an die erste Schwenkbewegung koppelt, umfasst das Getriebe zwei Abrollelemente, die aneinander abrollen und von denen das eine Abrollelement an den Lagersockel und das andere Abrollelement an den Tablarträger gekoppelt ist.

Soweit bei der Definition des erfindungsgemäßen Eckschrankbeschlags davon die Rede ist, dass eines seiner Bauteile um eine Schwenkachse verschwenkbar an einem anderen seiner Bauteile gelagert ist, bedeutet dies grundsätzlich, dass die jeweilige Schwenkachse ortsfest an dem anderen Bauteil angeordnet ist und dass die Lagerung des einen Bauteils an dem anderen Bauteil keine weiteren gewollten Freiheitsgrade als die Verschwenkbarkeit um die angegebene Schwenkachse aufweist. Entsprechend ist die erste vertikale Schwenkachse ortsfest gegenüber dem Lagersockel, und der Tragarm ist nur durch Verschwenken um diese Schwenkachse gegenüber dem Lagersockel beweglich. Ebenso ist die zweite vertikale Schwenkachse ortsfest gegenüber dem Tragarm, und der Tablarträger ist nur durch Verschwenken um diese zweite vertikale Schwenkachse gegenüber dem Tragarm beweglich.

Die beiden Abrollelemente des Getriebes, das die zweite Schwenkbewegung um die zweite Schwenkachse an die erste Schwenkbewegung um die erste Schwenkachse koppelt, können entweder direkt oder indirekt aneinander abrollen. Beim direkten Abrollen stehen die beiden Abrollelemente in direktem Kontakt. Beim indirekten aneinander Abrollen verläuft zwischen ihnen ein Riemen, eine Kette oder eine Stange, an dem/der dann sowohl das eine als auch das andere Abrollelement abrollt. Beispiele für Abrollelemente schließen insbesondere Zahnscheibensegmente ein. Wenn diese direkt aneinander abrollen spricht man auch von einem Kämmen der Zahnscheibensegmente. Bei einem indirekten aneinander Abrollen der Zahnscheibensegmente kann zwischen ihnen ein Zahnriemen, eine Kette oder eine Zahnstange verlaufen, die von beiden Zahnscheibensegmenten gekämmt wird.

Dass das eine Abrollelement an den Lagersockel bzw. das andere Abrollelement an den Tablarträger gekoppelt ist, bedeutet, dass sich ein beim Abrollen der Abrollelemente aneinander auf das eine Abrollelement auswirkende Drehmoment direkt oder indirekt an dem Lagersockel und das auf das andere Abrollelement einwirkende Drehmoment direkt oder indirekt an dem Tablarträger abstützt.

Mit Hilfe der aneinander abrollenden Abrollelemente ist eine Übersetzung und/oder eine Bewegungsrichtungsumkehr in das die beiden Schwenkbewegungen koppelnde Getriebe einführbar, ohne dass es zu einer starken Belastung von Lagern seiner Getriebeelemente kommt. Insbesondere gelingt es mit Hilfe des die Abrollelemente umfassenden Getriebes, die beiden Schwenkbewegungen besser zur Erfüllung des Zwecks einander zu koppeln, das Tablar auf dem Tablarträger weit vor die Türöffnung des Eckschranks hinauszubewegen, ohne hierbei massive Einschränkungen hinsichtlich der Größe des Tablars bezogen auf die Grundfläche des Eckschranks in Kauf nehmen zu müssen.

In einer konkreten Ausführungsform des erfindungsgemäßen Eckschrankbeschlags ist das eine Abrollelement starr an dem Lagersockel befestigt, und das andere Abrollelement ist um eine vertikale Rollachse verschwenkbar an dem Tragarm gelagert. Zwischen dem einen Abrollelement und dem Lagersockel ist entsprechend kein bewegliches Lager, sondern nur eine starre Abstützung vorzusehen. Konkret kann das Abrollelement starrer Bestandteil des Lagersockels sein. So ist bei dem neuen Eckschrankbeschlag an dem Lagersockel notwendigerweise nur ein einziges bewegliches Lager für den Tragarm vorgesehen. Das zweite Abrollelement ist bereits an dem Tragarm gelagert. Entsprechend ändert sich bei der ersten Schwenkbewegung des Tragarms um die erste vertikale Schwenkachse kein Abstand der zweiten vertikalen Schwenkachse zu einem Anbindungspunkt des Getriebes an den Lagersockel, was bei dem aus der EP 2 353 436 B1 bekannten Eckschrankbeschlag die Bewegung des Tablars weit vor die Türöffnung des Eckschranks behindert.

Bei dem erfindungsgemäßen Eckschrankbeschlag kann ein Lenker mit seinem einen Ende schwenkbar an einen ersten Anlenkpunkt angelenkt sein, der zusammen mit dem anderen Abrollelement um dessen Rollachse schwenkt, während er mit seinem anderen Ende an einem zweiten Anlenkpunkt angelenkt ist, der zusammen mit dem Tablarträger um die zweite Schwenkachse schwenkt. Dass die beiden Anlenkpunkte zusammen mit dem anderen Abrollelement bzw. den Tablarträger um die Rollachse bzw. die zweite Schwenkachse schwenken, kann insbesondere bedeuten, dass der Lenker einerseits an ein das andere Abrollelement umfassendes Hebelelement und andererseits an den Tablarträger angelenkt ist. Zumindest ist er jeweils an ein Bauteil angelenkt, das bei montiertem Eckschrankbeschlag gegenüber dem anderen Abrollelement und dessen Rollachse bzw. gegenüber dem Tablarträger um die zweite Schwenkachse drehfest angeordnet ist. Durch den Lenker weist das Getriebe des erfindungsgemäßen Eckschrankbeschlags eine Viergelenkanordnung auf, in der die vier Gelenke die beiden Anlenkpunkte des Lenkers, das Schwenklager, in dem der Tablarträger um die zweite vertikale Schwenkachse verschwenkbar an dem Tragarm gelagert ist, und ein Drehlager sind, in dem das andere Abrollelement um seine Rollachse verschwenkbar an dem Tragarm gelagert ist. Diese Viergelenkanordnung ist durch die einander abrollenden Abrollelemente an die erste Schwenkbewegung des Tragarms um die erste vertikale Schwenkachse gekoppelt.

Bei dem erfindungsgemäßen Eckschrankbeschlag kann der Lenker den Tragarm kreuzen, so dass sein zweiter Anlenkpunkt auf derselben Seite der zweiten vertikalen Schwenkachse liegt wie der sich von der zweiten vertikalen Schwenkachse weg erstreckende Tablarträger. Dabei kann sich der Lenker durch eine Aussparung in dem Tragarm hindurch erstrecken. Auf diese Weise kann der Lenker gegenüber dem Tragarm geführt werden. Zudem ist ein in einer horizontalen Längsmittelebene des Eckschrankbeschlags angeordneter Lenker eine gute Basis für die Ausbildung eines Eckschrankbeschlags mit Rechts-/Links-Verwendbarkeit. Aus diesem Gesichtspunkt kann sich der Lenker auch durch eine weitere Aussparung in einem Hauptbalken des Tablarträgers hindurch zu dem zweiten Anlenkpunkt hin erstrecken, wenn dieser zweite Anlenkpunkt von dem Tragarm aus betrachtet, hinter dem Hauptbalken des Tablarträgers angeordnet ist. Diese Anordnung des zweiten Anlenkpunkts des Lenkers erlaubt eine vergleichsweise lange Ausbildung des Lenkers trotz seiner Anbindung an das zweite Abrollelement und damit einen besonders großen Schwenkarbeitsweg des Lenkers zwischen der maximal eingeschwenkten Stellung des Tablarträgers bzw. eines daran befestigten Tablars und der maximal ausgeschwenkten Stellung des Tablarträgers bzw. eines daran befestigten Tablars.

In einer anderen Ausführungsform des erfindungsgemäßen Eckschrankbeschlags ist ein Lenker vorgesehen, der weder den Tragarm noch den Hauptbalken des Tablarträgers kreuzt. Vielmehr ist der Lenker an einem über die zweite vertikale Schwenkachse hinausstehenden Fortsatz des Hauptbalkens des Tablarträgers und an ein drittes Abrollelement bzw. einen damit um eine weitere Rollachse umlaufenden Anlenkpunkt angelenkt. Hier wird also die Schwenkrichtungsumkehr, die der gekreuzte Verlauf des Lenkers und des Tragarms bei der zuvor beschriebenen Ausführungsform des erfindungsgemäßen Eckschrankbeschlags bewirkt, durch ein an dem anderen Abrollelement abrollendes weiteres Abrollelement erreicht. Auch ganz grundsätzlich kann das die beiden Schwenkbewegungen koppelnde Getriebe des erfindungsgemäßen Eckschrankbeschlags mehr als nur zwei Abrollelemente aufweisen.

Generell kann der Lenker zwischen 0,5 bis 2 mal so lang zwischen seinen Anlenkpunkten sein wie der Tragarm zwischen der Rollachse des anderen Abrollelements und der zweiten Schwenkachse. Die Gesamtlänge des Tragarms zwischen der ersten und der zweiten vertikalen Schwenkachse ist in aller Regel größer als dieses Vergleichsmaß für den Lenker. Vorzugsweise ist der Lenker zwischen seinen Anlenkpunkten zumindest länger als der Tragarm zwischen der Rollachse des anderen Abrollelements und der zweiten Schwenkachse. Konkret kann er bis zu etwa 20 % länger sein als dieses Vergleichsmaß.

Ein Abstand des ersten Anlenkpunkts des Lenkers zu der Rollachse des anderen Abrollelements kann 0,5 bis 2 mal so lang sein wie ein Abstand des zweiten Anlenkpunkts des Lenkers zu der zweiten vertikalen Schwenkachse. Vorzugsweise ist das zweite dieser Maße, d. h. der Abstand des zweiten Anlenkpunkts des Lenkers zu der zweiten Schwenkachse größer, beispielsweise um etwa 50 % größer, als das erste Maß, d. h. der Abstand des ersten Anlenkpunkts des Lenkers zu der Rollachse des anderen Abrollelements.

Der Tragarm kann zwischen der Rollachse des anderen Abrollelements und der zweiten Schwenkachse zwei- bis fünfmal so lang sein wie der Abstand des ersten Anlenkpunkts des Lenkers zu der Rollachse des anderen Abrollelements. Das heißt, der Tragarm ist zwischen der Rollachse des anderen Abrollelements und der zweiten Schwenkachse ebenso wie der Lenker zwischen seinen Anlenkpunkten deutlich länger als der Abstand des ersten Anlenkpunkts des Lenkers zu der Rollachse des anderen Abrollelements. Indem der Lenker zwischen seinen Anlenkpunkten zwei- bis fünfmal so lang ist wie der Abstand seines zweiten Anlenkpunkts zu der zweiten vertikalen Schwenkachse ist der Lenker zwischen seinen Anlenkpunkten und auch der Tragarm zwischen der Rollachse des anderen Abrollelements und der zweiten Schwenkachse deutlich länger als der Abstand des zweiten Anlenkpunkts des Lenkers zu der zweiten Schwenkachse.

Der Abstand des ersten Anlenkpunkts des Lenkers zu der Rollachse des anderen Abrollelements ist vorzugsweise größer als ein Radius des andern Abrollelements um seine Rollachse. Hierdurch wird erreicht, dass der Umfangsweg, über den der erste Anlenkpunkt des Lenkers gegenüber dem Tragarm verschwenkt wird, größer ist als der Umfangsweg den das Abrollelement, d. h. seine abrollende Oberfläche gegenüber dem Tragarm zurücklegt. Konkret kann der Abstand des ersten Anlenkpunkts des Lenkers zu der Rollachse des anderen Abrollelements um 50 bis 200 % größer sein als oder etwa doppelt so groß sein wie der Radius des anderen Abrollelements um seine Rollachse.

Bezogen auf das eine Abrollelement kann das andere Abrollelement um seine Rollachse einen um bis zu 200 % größeren Radius aufweisen als das eine Abrollelement um die erste vertikale Schwenkachse. Hierdurch wird erreicht, dass die Winkelgeschwindigkeit, mit der das andere Abrollelement um seine Rollachse gegenüber dem Tragarm verschwenkt wird, gegenüber der Winkelgeschwindigkeit, mit der der Tragarm um die erste Schwenkachse verschwenkt wird, reduziert ist. Hierdurch kann auch die Winkelgeschwindigkeit der zweiten Schwenkbewegung gegenüber der ersten Schwenkbewegung reduziert werden. Insbesondere wird aber der erste Anlenkpunkt des Lenkers, der bei dem aus der EP 2 353 436 B1 bekannten Eckschrankbeschlag ortsfest ist, mit einer gegenüber der ersten Schwenkbewegung reduzierten Winkelgeschwindigkeit in Richtung der Türöffnung des Eckschranks nachgeführt. Dies mögen die wesentlichen Gründe dafür sein, dass das jeweilige Tablar mit dem erfindungsgemäßen Eckschrankbeschlag besonders weit vor die Türöffnung des Eckschranks hinaus verfahrbar ist. Vorzugsweise weist das andere Abrollelement um seine Rollachse einen um 20 bis 100 % oder etwa 50 % größeren Radius auf als das eine Abrollelement um die erste vertikale Schwenkachse.

Im einfachsten aber auch bereits sehr vorteilhaften Fall weisen beide Abrollelemente jeweils einen konstanten Radius auf. Grundsätzlich können die Radien der beiden Abrollelemente über ihre Abrollbewegung hinweg aber auch variieren. Dies ist trotz festen Abstand der Rollachse des anderen Abrollelements und der ersten Schwenkachse, um die die Rollachse gegenüber dem Lagersockel verschwenkt wird, problemlos möglich. Mit variierenden Radien können die erste Schwenkbewegung und die zweite Schwenkbewegung über die gesamte Auszugbewegung des Tablarträgers bzw. des Tablars noch detaillierter an die geometrischen Freiräume innerhalb des Eckschranks und durch seine Türöffnung hindurch abgestimmt werden.

Wie bereits angemerkt können die Abrollelemente Zahnscheiben- oder Zahnradsegmente sein, die einander kämmen.

Der erfindungsgemäße Eckschrankbeschlag kann eine lineare Feder- und/oder Dämpfungseinrichtung aufweisen, die mit ihrem einen Ende an einen dritten Anlenkpunkt angelenkt ist, der mit dem Tragarm um die erste Schwenkachse verschwenkt wird, und die mit ihrem anderen Ende an einen vierten Anlenkpunkt angelenkt ist, der zusammen mit dem anderen Abrollelement um dessen Rollachse schwenkt. Wenn dabei ein Abstand zwischen dem dritten und dem vierten Anlenkpunkt während der ersten Schwenkbewegung ein Extremum durchläuft und an den Enden der ersten Schwenkbewegung lokale Extrema entgegengesetzten Vorzeichens erreicht, ist die lineare Feder- und/oder Dämpfungseinrichtung zum gedämpften Selbsteinzug sowohl in die vollständig eingeschobene als auch in die vollständig ausgezogene Stellung des Tablarträgers bzw. eines daran befestigten Tablars nutzbar.

Vorzugsweise ist die lineare Feder- und/oder Dämpfungseinrichtung im Wesentlichen horizontal ausgerichtet und zusammen mit dem anderen Abrollelement in einem an dem Tragarm angesetzten Gehäuse angeordnet. Damit sind wesentliche bewegte Teile des erfindungsgemäßen Eckschrankbeschlags durch das Gehäuse umschlossen. So wird das Eintreten von Objekten oder gar Körperteilen eines Benutzers zwischen diese Teile verhindert. Zudem sorgt das Gehäuse für eine geschlossene optische Erscheinung des erfindungsgemäßen Eckschrankbeschlags. Wenn der dritte Anlenkpunkt bei dem erfindungsgemäßen Eckschrankbeschlag in mindestens einer eingefahrenen Grundstellung des Eckschrankbeschlags gegenüber dem vierten Anlenkpunkt um mindestens 2 mm höher liegt oder auf mindestens 2 mm anhebbar ist, kann als lineare Feder- und/oder Dämpfungseinrichtung eine grundsätzlich bekannte ölgedämpfte Gasfeder mit optimaler Wirksamkeit Verwendung finden. Solche ölgedämpften Gasfedern werden idealerweise zumindest leicht permanent geneigt eingebaut.

Vorzugsweise ist der Lagersockel an einer vertikalen Tragsäule des erfindungsgemäßen Eckschrankbeschlags gelagert und auf verschiedenen Höhen an dieser Tragsäule festklemmbar. Dabei können Bohrungen in der Tragsäule diskrete Höhen vorgeben, auf denen der Tragsockel festklemmbar ist.

Zur sicheren Abstützung des jeweiligen Tablars weist der Tablarträger mehrere untereinander beabstandete Tablarauflager auf. Dabei ist vorzugsweise eines der Tablarauflager als an dem Tablarträger festliegendes Festlager ausgebildet, während alle anderen Tablarauflager als in einer Längsrichtung des Tablarträgers bewegliche Loslager ausgebildet sind. Durch diese Loslager werden in Längsrichtung unvermeidbar auftretende Toleranzen zwischen dem Tablar und dem Tablarträger kompensiert. In vertikaler Richtung und quer zur Längsrichtung des Tablarträgers stützen hingegen auch die Loslager das Tablar spielfrei an dem Tablarträger ab. Das Festlager und das Loslager können jeweils gleiche Rastvorsprünge an den Tablarauflagern aufweisen, die in vertikaler Richtung lösbar an dem Tablarträger verrasten. Die Natur des jeweiligen Lagers als Festlager oder Loslager kann dabei durch vertikale Führungsbolzen an den Tablarauflagern definiert werden, die in vertikale Führungslöcher in dem Tablarträger eingreifen, wobei die Führungslöcher bei dem Festlager Rundlöcher und bei dem Loslager in der Längsrichtung des Tablarträgers gestreckte Langlöcher sind.

Ein erfindungsgemäßer Eckschrank mit einem erfindungsgemäßen Eckschrankbeschlag weist vorzugsweise nicht nur eine einen Lagersockel, einen Tragarm und einen Tablarträger umfassende Einheit, sondern mehrere, typischerweise zwei solche übereinander an der Tragsäule gelagerte Einheiten und darüber ausziehbar gelagerte Tablare auf.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine perspektivische Ansicht eines erfindungsgemäßen Eckschrankbeschlag mit zwei jeweils einen Lagersockel, einen Tragarm und einen Tablarträger umfassenden Einheiten zur ausziehbaren Abstützung jeweils eines Tablars auf unterschiedlicher Höhe an einer Tragsäule, wobei die eine Einheit in eingeschobenem und die andere Einheit in ausgezogenem Zustand gezeigt ist.
- **Fig. 2**: ist eine Fig. 1 entsprechende Ansicht grundsätzlich desselben Eckschrankbeschlags, in der Gehäuse der beiden Einheiten geöffnet sind, um die darin liegenden Bauteile zu zeigen.
- **Fig. 3**: ist eine Ansicht von oben der eingeschwenkten Einheit gemäß den Fig. 1 und 2 ganz ohne Darstellung des Gehäuses.
- **Fig. 4**: ist eine Fig. 3 entsprechende Ansicht derselben Einheit in derselben Auszugsstellung, bei der zur Verdeutlichung der Funktionsweise auch verdeckte Linien wiedergegeben sind.
- **Fig. 5**: ist eine Fig. 3 entsprechende Ansicht von oben einer Einheit in einer Zwischenstellung zwischen den Stellungen der beiden Einheiten in den Fig. 1 und 2.
- **Fig. 6**: ist eine Fig. 4 entsprechende Ansicht der Einheit in der Zwischenstellung gemäß Fig. 5.
- **Fig. 7**: ist eine den Fig. 3 und 5 entsprechende Ansicht der ausgezogenen Einheit gemäß den Fig. 1 und 2.
- **Fig. 8**: ist die den Fig. 4 und 6 entsprechende Ansicht der ausgezogenen Einheit gemäß Fig. 7.
- **Fig. 9**: ist eine perspektivische Ansicht eines erfindungsgemäßen Eckschrankbeschlags mit nur einer einen Tragsockel, ein Tragarm und einen Tablarträger umfassenden Einheit, wobei die Einheit in eingeschobener Stellung mit geöffnetem Gehäuse dargestellt ist und wobei an dem Tablarträger gelagerte Tablarauflager wiedergegeben sind.
- **Fig. 10**: zeigt den Eckschrankbeschlag gemäß Fig. 9 mit ausgezogener Einheit vor dem Befestigen eines Tablars, an das die Tablarauflager angeschraubt sind.
- **Fig. 11**: ist eine Ansicht von oben des Eckschrankbeschlags gemäß Fig. 1 und 2 mit über Tablarauflager an den Tablarträgern befestigten Tablaren, deren Böden weggelassen sind.
- **Fig. 12**: ist eine perspektivische Ansicht des Eckschrankbeschlags gemäß Fig. 11, wieder mit weggelassenen Böden der Tablare.
- **Fig. 13**: ist eine perspektivische Ansicht des Eckschrankbeschlags gemäß den Fig. 11 und 12 einschließlich der Böden der Tablare eingebaut in einen Eckschrank und
- **Fig. 14**: ist eine Ansicht von oben des Eckschranks mit dem Eckschrankbeschlag gemäß Fig. 13.

### FIGURENBESCHREIBUNG

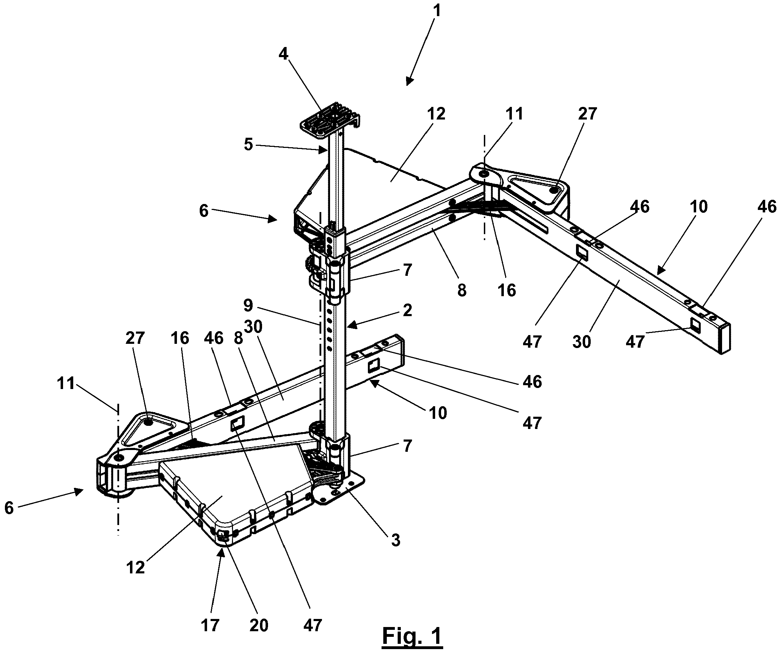

Der in **Fig. 1** dargestellte Eckschrankbeschlag 1 dient zur beweglichen, d. h. ausziehbaren Lagerung von zwei hier nicht dargestellten Tablaren in einem hier ebenfalls nicht dargestellten Eckschrank. Der Eckschrankbeschlag 1 umfasst eine Tragsäule 2, die in der vorderen Mitte des Eckschranks neben seiner Türöffnung festzulegen ist. Dazu weist die Tragsäule 2 eine Fußplatte 3 und eine Kopfplatte 4 an einer nach oben teleskopierbaren Teilsäule 5 auf. An der Tragsäule 2 ist für jedes der beiden Tablare eine Einheit 6 gelagert. Jede der beiden Einheiten 6 umfasst einen Lagersockel 7, der an der Tragsäule 2 festgeklemmt ist, einen Tragarm 8, der um eine erste vertikale Schwenkachse 9 verschwenkbar an dem Lagersockel 7 gelagert ist und einen Tablarträger 10, der um eine zweite vertikale Schwenkachse 11 an dem Tragarm 8 verschwenkbar gelagert ist. Dabei ist die Schwenkbewegung des Tragarms 8 um die erste Schwenkachse 9 gegenüber dem Lagersockel 7 über ein hier unter anderem durch ein Gehäuse 12 verdecktes Getriebe mit der Schwenkbewegung des Tablarträgers 10 um die zweite vertikale Schwenkachse 11 gekoppelt. Das heißt, trotz dieser beiden Verschwenkbarkeiten ist jeder Schwenkstellung des Tragarms 8 um die Schwenkachse 9 eine Schwenkstellung des Tragarms 10 um die Schwenkachse 11 zugeordnet. Fig. 1 zeigt bei der unten an der Tragsäule 2 gelagerten Einheit 6 eine maximal eingeschwenkte Schwenkstellung oder maximal eingeschobene Stellung, bei der sich ein an dem Tragarm 8 gelagertes Tablar vollständig in dem jeweiligen Eckschrank befindet, und bei der oberen Einheit 6 eine maximal ausgeschwenkte Schwenkstellung oder maximal ausgezogene Stellung, bei der sich ein an dem Tablarträger 10 gelagertes Tablar 35 maximal außerhalb des Eckschranks vor dessen Türöffnung befindet.

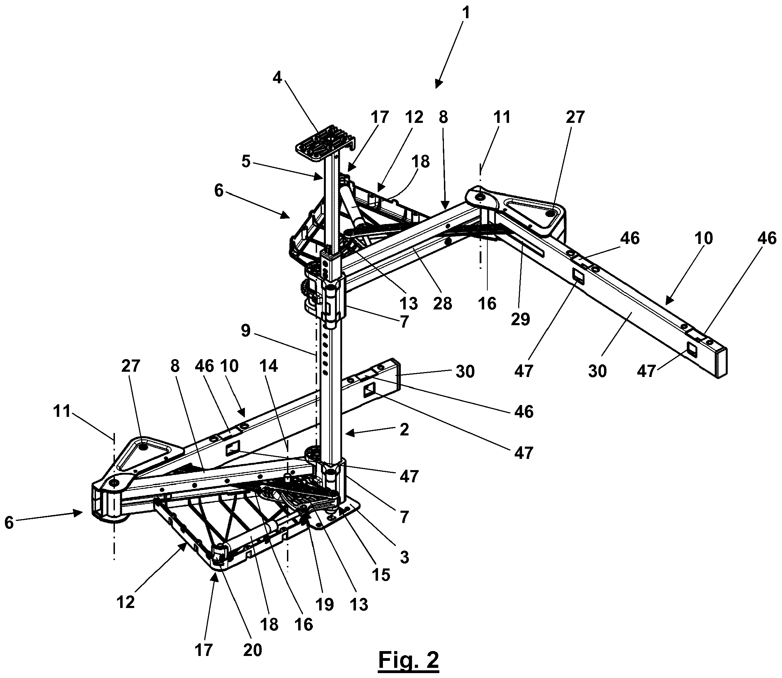

Die Darstellung des Eckschrankbeschlags 1 mit geöffneten Gehäusen 12 in **Fig. 2** lässt etwas von dem Inhalt der Gehäuse 12 erkennen. In jedem an dem zugehörigen Tragarm 8 befestigten Gehäuse 12 ist ein Hebelelement 13 um eine gegenüber dem Tragarm 8 ortsfeste vertikale Rollachse 14 verschwenkbar gelagert. An dem Hebelelement 13 ist in einem ersten Anlenkpunkt 15 ein gabelförmiges Ende eines Lenkers 16 angelenkt, der mit seinem anderen Ende an einen Anlenkpunkt 27 angelenkt ist, der auf der dem Anlenkpunkt 15 abgekehrten Seite eines Hauptbalkens 30 des Tablarträgers 10 liegt und gegenüber dem Tablarträger 10 ortsfest ist. Von seinem Anlenkpunkt 15 zu seinem Anlenkpunkt 27 erstreckt sich der Lenker 16 durch eine Aussparung 28 in dem Tragarm 8 und eine Aussparung 29 in dem Hauptbalken 30 des Tablarträgers 10. Der Tragarm 8 ist zur Bildung der Aussparung 28 aus zwei an endseitige Hülsen angeschweißten Vierkantrohren ausgebildet. An den Hauptbalken 30 des Tablarträgers 10 sind zwei Bleche angeschweißt, die zugleich ein Schwenklager zwischen dem Tragarm 8 und dem Tablarträger 10 mit der Schwenkachse 11 ausbilden und an denen der zweite Anlenkpunkt 27 des Lenkers 16 ausgebildet ist. Weiterhin ist in einem dritten Anlenkpunkt 17, der gegenüber dem Tragarm 8 ortsfest ist, ein Ende einer Gasdruckfeder 18 mit Öldämpfung beim Erreichen ihres maximalen Auszugs angelenkt, die mit ihrem anderen Ende an einen vierten Anlenkpunkt 19 an dem Hebelelement 13 angelenkt ist. Die Gasdruckfeder 18 erreicht ihren maximalen Auszug zwischen den Anlenkpunkten 17 und 19 in den in Fig. 1 und 2 dargestellten maximal eingeschwenkten und ausgeschwenkten Schwenkstellungen der Einheiten 6. Dazwischen durchläuft ihr Auszug ein lokales Minimum. So stabilisiert die Gasdruckfeder 18 die Einheiten 6 in ihren beiden Endlagen und dämpft zugleich die Einheiten 6 beim Einlaufen in diese Endlagen. Der Anlenkpunkt 17 ist jeweils gegenüber dem Anlenkpunkt 19 leicht erhöht. Hierzu ist ein Stellelement 20 nach oben ausgerückt, damit die Einbaulage der Gasdruckfedern 18 leicht geneigt ist, was für die sichere Funktion ihrer Öldämpfung vorteilhaft ist. Fig. 2 zeigt zwar die Ausbildung eines Viergelenks mit den Anlenkpunkten 15 und 17 des Lenkers 16 sowie der Rollachse 14 des Hebelelements 13 und der zweiten vertikalen Schwenkachse 9. Fig. 2 lässt aber noch nicht erkennen, wie dieses Viergelenk an die Schwenkbewegung des Tragarms 8 um die erste vertikale Schwenkachse 9 gekoppelt ist.

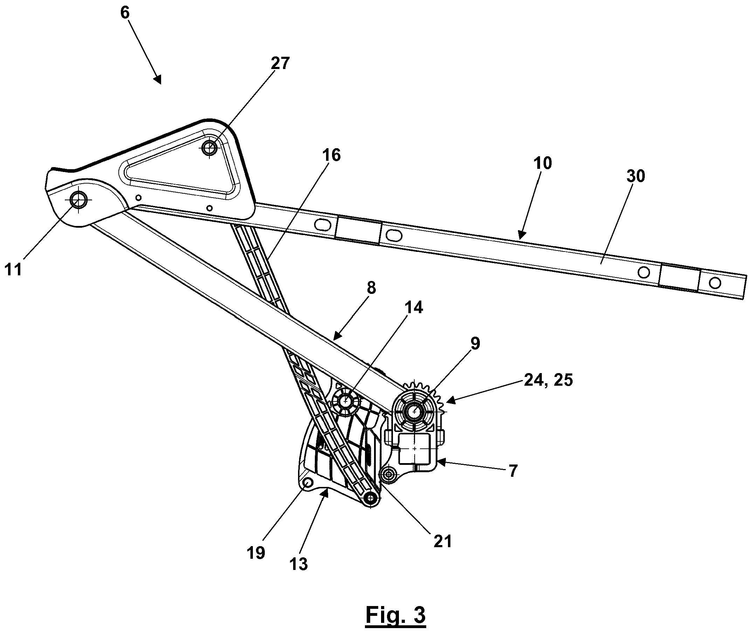

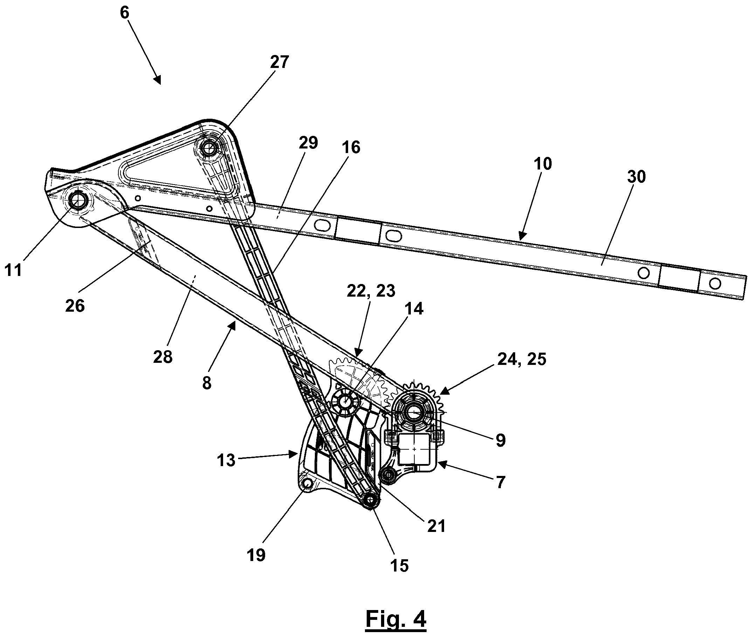

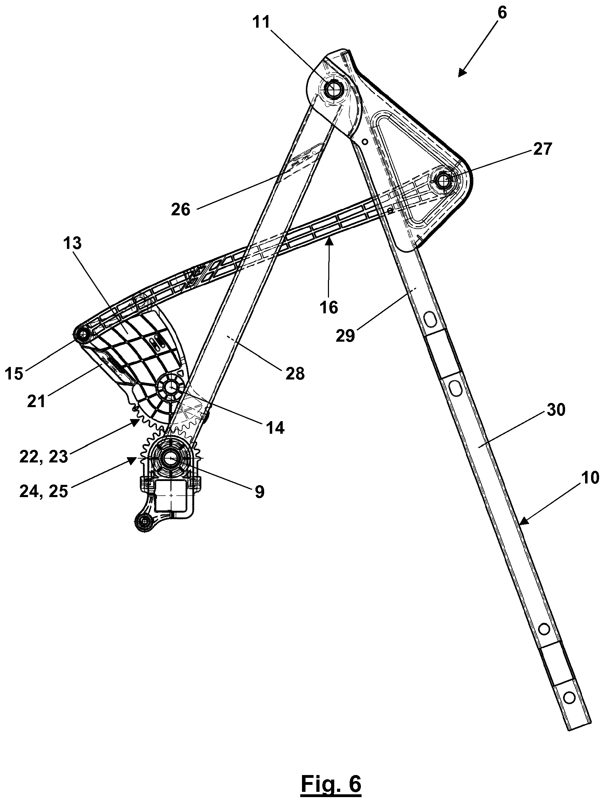

Diese Kopplung ist in den **Fig. 3 bis 8** dargestellt. Dabei ist jeweils nur eine Einheit 6 mit dem zugehörigen Lagersockel 7, dem Tragarm 8, dem Tablarträger 10, dem Hebelelement 13 und dem Lenker 16 wiedergegeben. Die Fig. 3 und 4, die die maximal eingeschwenkte Stellung der Einheit 6 zeigen, zeigen, dass das Hebelelement 13 mit einem Anschlag 21 an den Lagersockel 7 anschlägt und mit einem Abrollelement 22 in Form eines mit den Anlenkpunkten 15 und 19 um die Rollachse 14 umlaufenden Zahnradsegments 23 an einem Abrollelement 24 angreift, das ein starr an dem Lagersockel 7 gelagertes und sich um die erste vertikale Schwenkachse 9 erstreckendes weiteres Zahnradsegment 25 ist. Anders gesagt kämmen sich die beiden Zahnradsegmente 23 und 25 und koppeln so die Schwenkbewegung des Tragarms 8 um die erste vertikale Schwenkachse 9 mit der Schwenkbewegung des Tablarträgers 10 um die zweite vertikale Schwenkachse 11 mittels der zuvor beschriebenen Viergelenkanordnung. Dabei sorgt ein gegenüber dem Abrollelement 24 um etwa 50 % größerer Radius des Abrollelements 22 dafür, dass sich das Hebelelement 13 mit einer geringeren Winkelgeschwindigkeit gegenüber dem Tragarm 8 bewegt als der Tragarm 8 gegenüber dem Lagersockel 7. Die aneinander abrollenden Abrollelemente 22 und 24 geben in jeder Schwenkstellung des Tragarms 8 um die erste vertikale Schwenkachse 9 einen bestimmten Winkel des Hebelelements 13 gegenüber dem Tragarm 8 und damit eine bestimmte Stellung der gesamten Viergelenkanordnung vor. Auf diese Weise sind die beiden Schwenkbewegungen des Tragarms 8 um die erste vertikale Schwenkachse 9 und des Tablarträgers 10 um die zweite vertikale Schwenkachse 11 vollständig definiert gekoppelt.

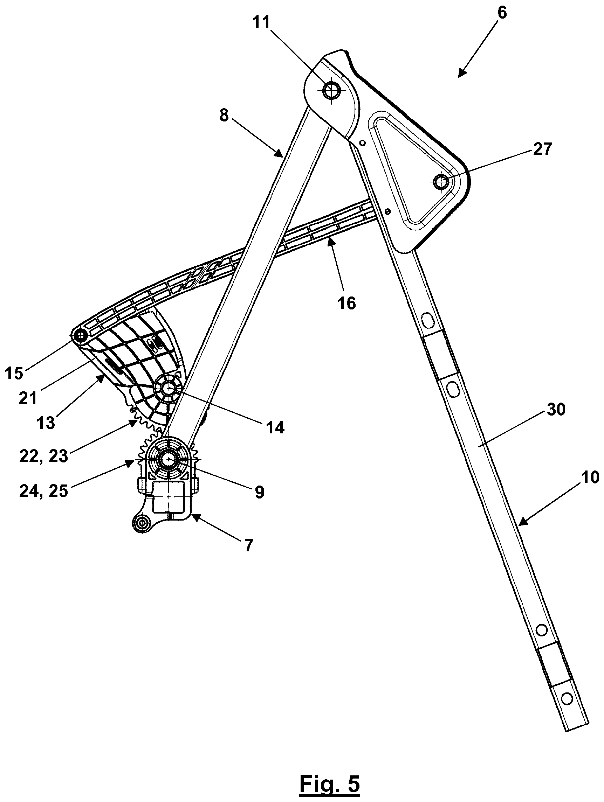

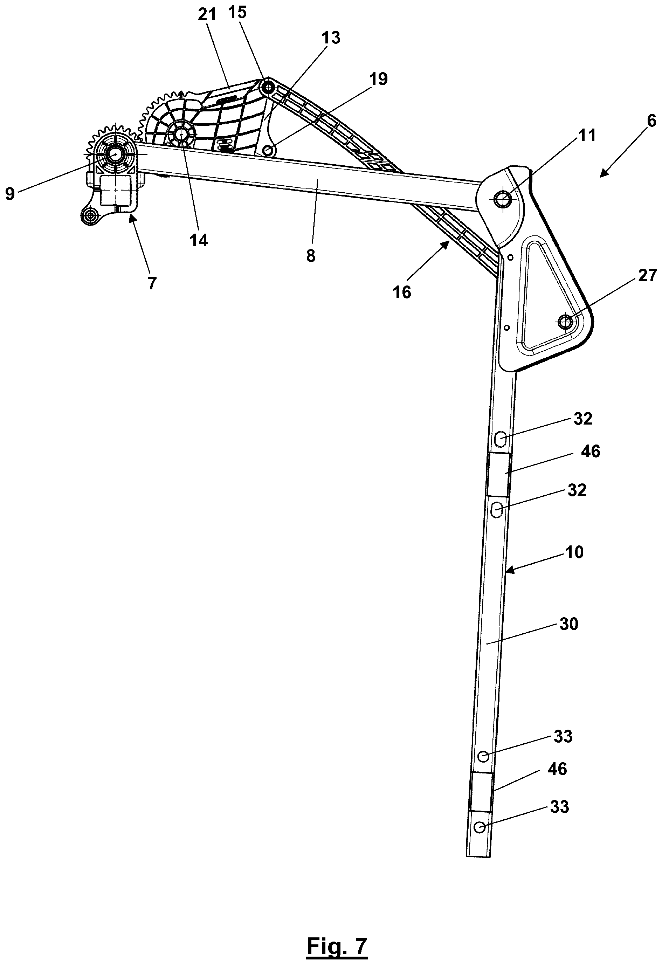

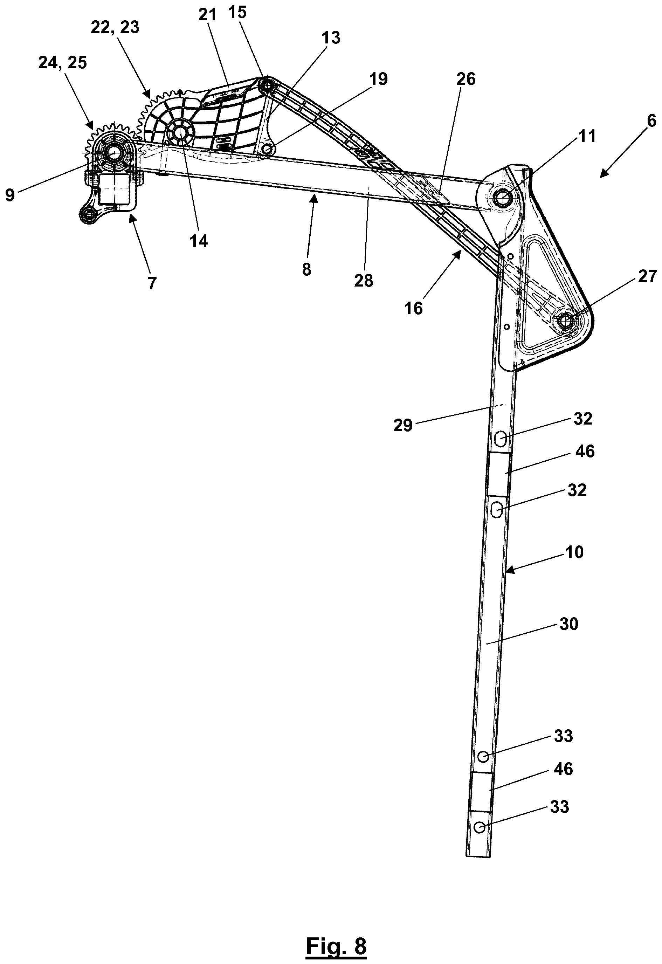

Die Fig. 5 bis 8 zeigen das weitere Ausschwenken der Einheit 6, bis der Lenker 16 am der Schwenkachse 11 benachbarten Ende der Aussparung 28 des Tragarms 8 an einen Anschlag 26 anschlägt. Der Anschlag 26 kann dabei bauidentisch mit dem Anschlag 21 aus elastischem Material ausgebildet sein. Bis er die entsprechende Schwenkstellung gemäß den Fig. 7 und 8 erreicht, hat der Tragarm 8 um die erste vertikale Schwenkachse 9 einen Winkel von etwa 135° überstrichen. Derweil hat der Schwenkhebel 13 gegenüber dem Tragarm 8 einen Winkel von etwa 90° überstrichen. Dabei hat sich der Anlenkpunkt 15 des Lenkers 16 von der im Eckschrank befindlichen Seite der Tragsäule 2 bis weit in die hinter der Türöffnung befindliche Seite der Tragsäule hineinbewegt und so den Winkel zwischen dem Tablarträger 10 und dem Tragarm 8 weit geöffnet. Dadurch gelangt das an dem Tablarträger 10 befestigte Tablar weit vor die Türöffnung des Eckschranks. Zudem kollidiert es trotz großer Abmessungen nicht mit dem Eckschrank.

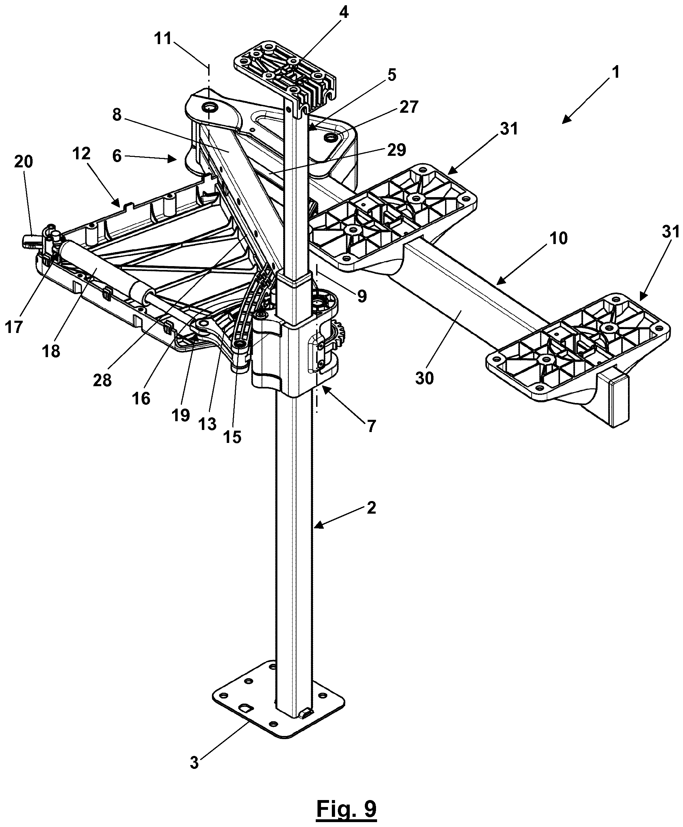

**Fig. 9****,** die den Eckschrankbeschlag 1 mit nur einer Einheit 6 und der Tragsäule 2 zeigt, gibt zusätzlich an dem Hauptbalken 30 des Tablarträgers 10 gelagerte Tablarauflager 31 wieder, die in entsprechende Befestigungslöcher 46 und Führungslöcher 32 bzw. 33 (siehe die Fig. 7 und 8) eingreifen. In den Befestigungslöchern 46 verrasten die Tablarauflager 31 lösbar in vertikaler Richtung mit Hilfe von in seitliche Rastlöcher 47 (siehe die Fig. 1, 2 und 10) eingreifenden Rastvorsprüngen. Die Führungslöcher 32 sind als Langlöcher in dem Hauptbalken 30 ausgebildet, so dass das darin mit runden Führungsbolzen eingreifende Tablarauflager 31 in Richtung des Hauptbalkens 30 ein Loslager darstellt, während das in die Befestigungsöffnung 33, die als Rundlöcher ausgebildet sind, mit passenden runden Führungsbolzen eingreifende Tablarauflager 31 ein Festlager ist.

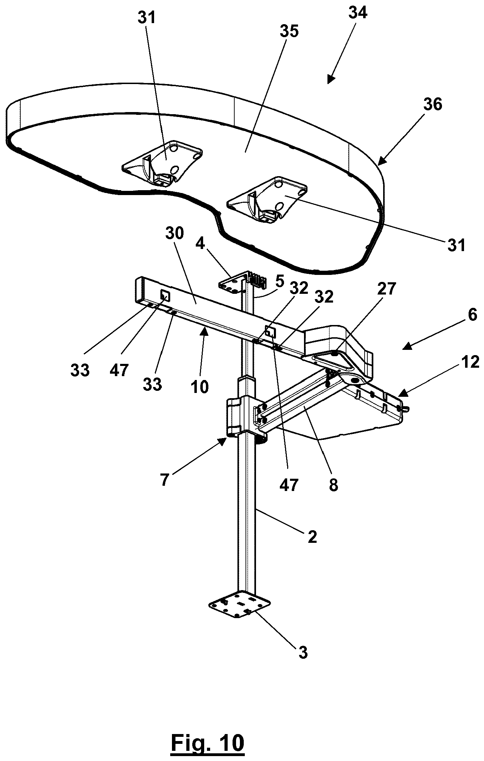

**Fig. 10** zeigt in einer perspektivischen Ansicht von unten die an ein Tablar 34 mit einem Boden 35 und einem Rand 36 im Bereich des Bodens 35 angeschraubten Tablarauflager 31 vor dem Verbinden der Tablarauflager mit dem Hauptbalken 30 des Tablarträgers 10 zum Befestigen des Tablars 34 an der Einheit 6.

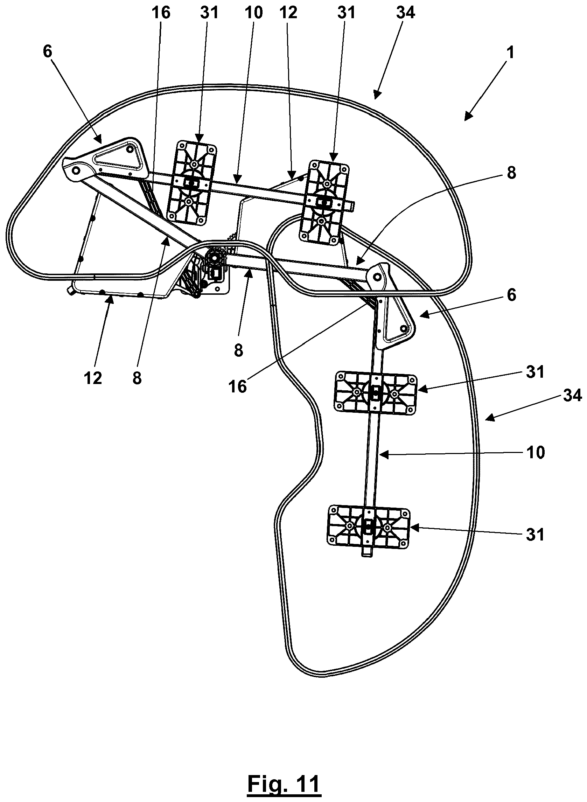

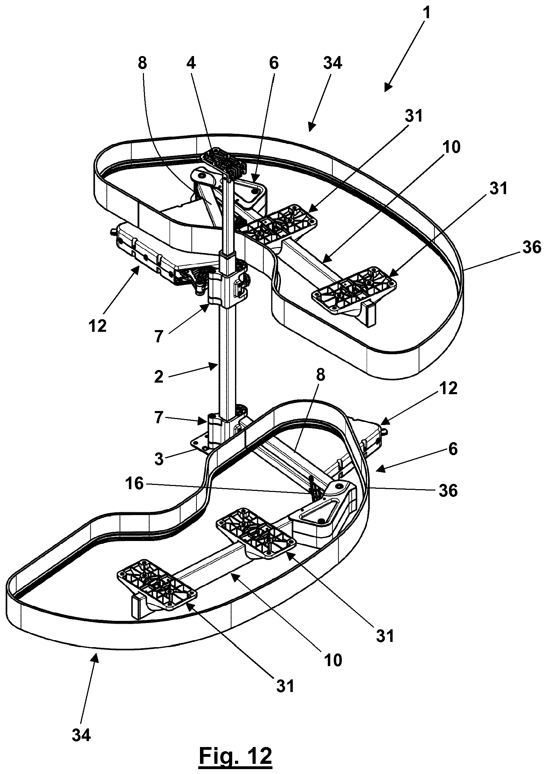

**Die** **Fig. 11** **und** **12** zeigen in zwei perspektivischen Ansichten den Eckschrankbeschlag 1 mit zwei mit Tablaren 34 ausgestatteten Einheiten 6, wobei die Böden 35 der Tablare weggelassen sind, um den Blick auf die Einheiten 6 freizugeben. Die Fig. 11 und 12 zeigen deutlich, wie weit sich das jeweilige Tablar 34 vorbewegt, wenn die zugehörige Einheit 6 aus ihrer vollständig eingeschwenkten Schwenkstellung in ihre vollständig ausgeschwenkte Schwenkstellung überführt wird. Die aus Fig. 11 ersichtliche Schnittfläche zwischen den beiden Stellungen des Tablars 34 ist nur klein. Dies ist gleichbedeutend damit, dass das Tablar 34 fast vollständig vor die Türöffnung des jeweiligen Eckschranks herausgezogen werden kann.

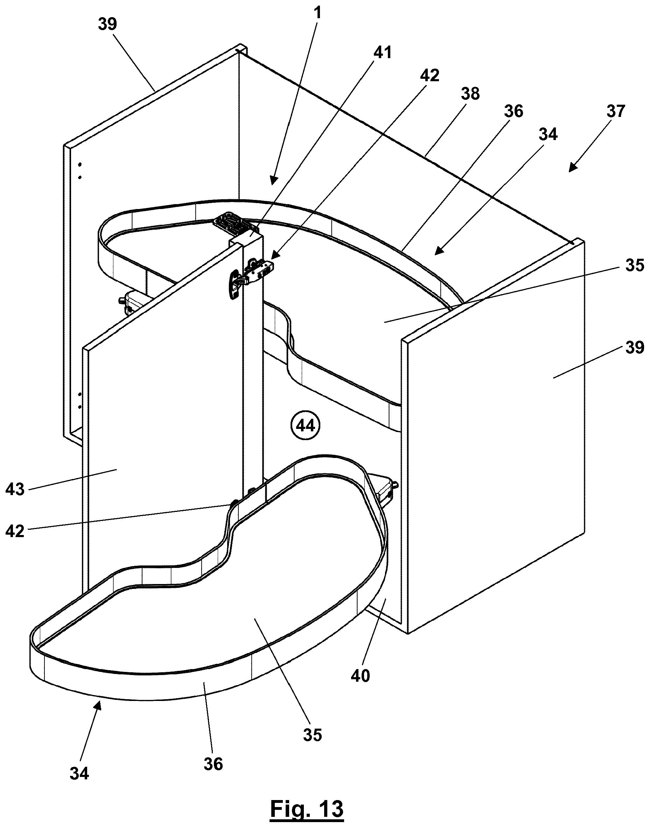

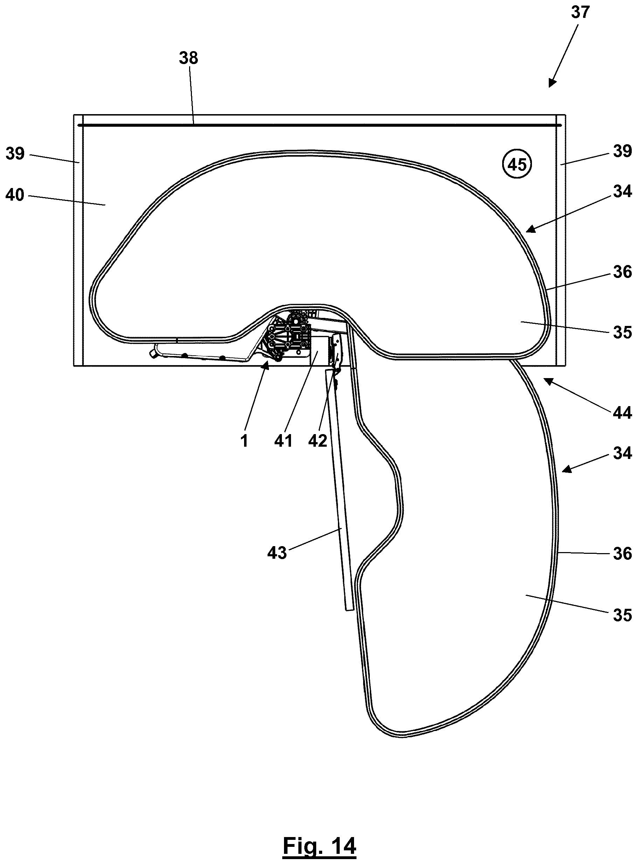

Die **Fig. 13** **und** **14** zeigen schließlich einen Eckschrank 37 mit einer Rückwand 38, Seitenwänden 39, einem Boden 40, einen Vertikalträger 41 und einer über Scharniere 42 aufschwenkbar an den Vertikalträger gelagerten Tür 43 zum wahlweisen Verschließen einer Türöffnung 44. Dargestellt ist der Eckschrank 37 mit geöffneter Türöffnung 44, über die hinaus das untere Tablar 34 nahezu vollständig aus dem Eckschrank 37 herausgezogen ist, während das obere Tablar 34 in den Eckschrank 37 eingeschoben ist. Fig. 13 zeigt, dass die Tragsäule des Eckschrankbeschlags 1 auf der der Türöffnung 44 abgekehrten Seite des Vertikalträgers 41 verdeckt angeordnet ist. Fig. 14 lässt deutlich werden, dass die Tablare 34 verglichen mit der Grundfläche 45 des Eckschranks 37 sehr großflächig sind und dennoch zu sehr großen Anteilen über die Türöffnung 44 hinaus aus dem Eckschrank 37 ausziehbar sind.

### BEZUGSZEICHENLISTE

- 1: Eckschrankbeschlag
- 2: Tragsäule
- 3: Fußplatte
- 4: Kopfplatte
- 5: Teilsäule
- 6: Einheit
- 7: Lagersockel
- 8: Tragarm
- 9: erste vertikale Schwenkachse
- 10: Tablarträger
- 11: zweite vertikale Schwenkachse
- 12: Gehäuse
- 13: Hebelelement
- 14: Rollachse
- 15: erster Anlenkpunkt
- 16: Lenker
- 17: dritter Anlenkpunkt
- 18: Gasdruckfeder
- 19: vierter Anlenkpunkt
- 20: Stellelement
- 21: Anschlag
- 22: Abrollelement
- 23: Zahnradsegment
- 24: Abrollelement
- 25: Zahnradsegment
- 26: Anschlag
- 27: zweiter Anlenkpunkt
- 28: Aussparung
- 29: Aussparung
- 30: Hauptbalken
- 31: Auflager
- 32: Führungsloch
- 33: Führungsloch
- 34: Tablar
- 35: Boden
- 36: Rand
- 37: Eckschrank
- 38: Rückwand
- 39: Seitenwand
- 40: Boden
- 41: Vertikalträger
- 42: Scharnier
- 43: Tür
- 44: Türöffnung
- 45: Grundfläche
- 46: Befestigungsloch
- 47: Rastloch

## Patentansprüche

1. Eckschrankbeschlag (1) zur beweglichen Lagerung eines Tablars (34) in einem Eckschrank (37), mit
- einem Lagersockel (7),
- einem in einer ersten Schwenkbewegung um eine erste vertikale Schwenkachse (9) verschwenkbar an dem Lagersockel (7) gelagerten Tragarm (8),
- einem in einer zweiten Schwenkbewegung um eine zweite vertikale Schwenkachse (11) verschwenkbar an dem Tragarm (8) gelagerten Tablarträger (10) und
- einem Getriebe, das die zweite Schwenkbewegung an die erste Schwenkbewegung koppelt,
**dadurch gekennzeichnet, dass** das Getriebe zwei Abrollelemente (22, 24) umfasst, die direkt oder unter Vermittlung eines Riemens, einer Kette oder einer Stange aneinander abrollen und von denen das eine Abrollelement (24) an den Lagersockel (7) und das andere Abrollelement (22) an den Tablarträger (10) gekoppelt ist.

2. Eckschrankbeschlag (1) nach Anspruch 1, **dadurch gekennzeichnet, dass** das eine Abrollelement (24) starr an dem Lagersockel (7) befestigt ist und dass das andere Abrollelement (22) um eine vertikale Rollachse (14) verschwenkbar an dem Tragarm (8) gelagert ist.

3. Eckschrankbeschlag (1) nach Anspruch 2, **dadurch gekennzeichnet, dass** ein Lenker (16) mit seinem einen Ende schwenkbar an einen ersten Anlenkpunkt (15), der zusammen mit dem anderen Abrollelement (22) um dessen Rollachse (14) schwenkt, und mit seinem anderen Ende an einen zweiten Anlenkpunkt (27) angelenkt ist, der zusammen mit dem Tablarträger (10) um die zweite Schwenkachse (11) schwenkt.

4. Eckschrankbeschlag (1) nach Anspruch 3, **dadurch gekennzeichnet, dass** der Lenker (16) den Tragarm (8) kreuzt, wobei sich der Lenker (16) optional durch eine Aussparung (28) in dem Tragarm (8) hindurch erstreckt.

5. Eckschrankbeschlag (1) nach Anspruch 4, **dadurch gekennzeichnet, dass** sich der Lenker (16) durch eine weitere Aussparung (29) in einem Hauptbalken (30) des Tablarträgers (10) hindurch zu dem zweiten Anlenkpunkt (27) hin erstreckt.

6. Eckschrankbeschlag (1) nach einem der Ansprüche 3 bis 5, **dadurch gekennzeichnet,**
- **dass** der Lenker (16) 0,5 bis 2 mal so lang zwischen seinen Anlenkpunkten (15, 27) ist wie der Tragarm (8) zwischen der Rollachse (14) des anderen Abrollelements (22) und der zweiten Schwenkachse (11),
- **dass** ein Abstand des ersten Anlenkpunktes (15) des Lenkers (16) zu der Rollachse (14) des anderen Abrollelements (22) 0,5 bis 2 mal so lang ist wie ein Abstand des zweiten Anlenkpunkts (27) des Lenkers (16) zu der zweiten Schwenkachse (11),
- **dass** der Tragarm (8) zwischen der Rollachse (14) des anderen Abrollelements (22) und der zweiten Schwenkachse (11) 2 bis 5 mal so lang ist wie der Abstand des ersten Anlenkpunkts (15) des Lenkers (16) zu der Rollachse (14) des anderen Abrollelements (22) und
- **dass** der Lenker (16) zwischen seinen Anlenkpunkten (15, 27) 2 bis 5 mal so lang ist wie der Abstand seines zweiten Anlenkpunkts (27) zu der zweiten Schwenkachse (11).

7. Eckschrankbeschlag (1) nach einem der Ansprüche 3 bis 6, **dadurch gekennzeichnet, dass** der oder ein Abstand des ersten Anlenkpunkts (15) zu der Rollachse (14) des anderen Abrollelements (22) um 50 % bis 200 % größer ist als ein Radius des anderen Abrollelements (22) um seine Rollachse (14).

8. Eckschrankbeschlag (1) nach einem der vorhergehenden Ansprüche, **dadurch gekennzeichnet, dass** das andere Abrollelement (22) um seine Rollachse (14) einen um bis zu 200 % oder einen um 20 % bis 100 % größeren Radius aufweist als das eine Abrollelement (24) um die erste vertikale Schwenkachse (9).

9. Eckschrankbeschlag (1) nach einem der vorhergehenden Ansprüche, **dadurch gekennzeichnet, dass** die Abrollelemente (22, 24) jeweils einen konstanten Radius aufweisen.

10. Eckschrankbeschlag (1) nach einem der vorhergehenden Ansprüche, **dadurch gekennzeichnet, dass** die Abrollelemente (22) Zahnscheiben- oder Zahnradsegmente (23, 25) sind.

11. Eckschrankbeschlag (1) nach einem der vorhergehenden Ansprüche, **dadurch gekennzeichnet, dass** eine lineare Feder- und/oder Dämpfungseinrichtung mit ihrem einen Ende an einen dritten Anlenkpunkt (17), der mit dem Tragarm (8) um die erste Schwenkachse (9) verschwenkt wird, und mit ihrem anderen Ende an einen vierten Anlenkpunkt (19) angelenkt ist, der zusammen mit dem anderen Abrollelement (22) um dessen Rollachse (14) schwenkt, wobei ein Abstand zwischen dem dritten und dem vierten Anlenkpunkt (17, 19) während der ersten Schwenkbewegung ein Extremum durchläuft.

12. Eckschrankbeschlag (1) nach Anspruch 11, **dadurch gekennzeichnet, dass** die lineare Feder- und/oder Dämpfungseinrichtung im Wesentlichen horizontal ausgerichtet ist und zusammen mit dem anderen Abrollelement (22) in einem an den Tragarm (8) angesetzten Gehäuse angeordnet ist, wobei der dritte Anlenkpunkt (17) optional in mindestens einer eingefahrenen Grundstellung des Eckschrankbeschlags (1) gegenüber dem vierten Anlenkpunkt (19) um mindestens 2 mm höher liegt oder anhebbar ist.

13. Eckschrankbeschlag (1) nach einem der vorhergehenden Ansprüche, **dadurch gekennzeichnet, dass** der Lagersockel (7) an einer vertikalen Tragsäule (2) gelagert und auf verschiedenen Höhen an der Tragsäule (2) festklemmbar ist.

14. Eckschrankbeschlag (1) nach einem der vorhergehenden Ansprüche, **dadurch gekennzeichnet, dass** der Tablarträger (10) mehrere untereinander beabstandete Tablarauflager aufweist, wobei eines der Tablarauflager als an dem Tablarträger (10) festliegendes Festlager und alle anderen Tablarauflager optional als in einer Längsrichtung des Tablarträgers (10) bewegliche Loslager ausgebildet sind.

15. Eckschrank (37) mit einem Eckschrankbeschlag (1) nach einem der vorhergehenden Ansprüche und einem an dem Tablarträger (10) des Eckschrankbeschlags (1) befestigten Tablar (34).

## Claims

1. Corner cabinet fitting (1) for movably mounting a shelf (34) in a corner cabinet (37), the corner cabinet fitting (1) comprising
- a bearing pedestal (7),
- a supporting arm (8) mounted to the bearing pedestal (7) such as to be pivotable in a first pivoting movement about a first vertical pivot axis (9),
- a shelf carrier (10) mounted to the supporting arm (8) such as to be pivotable in a second pivoting movement about a second vertical pivot axis (11), and
- a mechanism which couples the second pivoting movement to the first pivoting movement,
**characterized in that** the mechanism includes two rolling elements (22, 24), which roll on one another directly or via a belt, a chain or a rod, and of which one rolling element (24) is coupled to the bearing pedestal (7) and the other rolling element (22) is coupled to the shelf carrier (10).

2. Corner cabinet fitting (1) according to claim 1, **characterized in that** the one rolling element (24) is rigidly fixed to the bearing pedestal (7), and the other rolling element (22) is mounted to the supporting arm (8) such as to be pivotable about a vertical rolling axis 14.

3. Corner cabinet fitting (1) according to claim 2, **characterized in that** a control lever (16), with its one end, is hinged to a first hinge point (15) which together with the other rolling element (22) pivots about the rolling axis (14) of the other rolling element (22), and, with its other end, to a second hinge point (27) which together with the shelf carrier (10) pivots about the second pivot axis (11).

4. Corner cabinet fitting (1) according to claim 3, **characterized in that** the control lever (16) crosses the supporting arm (8), wherein the control lever (16) optionally extends through an opening (28) in the supporting arm (8).

5. Corner cabinet fitting (1) according to claim 4, **characterized in that** the control lever (16), up to the second hinge point (27), extends through a further opening (29) in a main beam (30) of the shelf carrier (10).

6. Corner cabinet fitting (1) according to any of the claims 3 to 5, **characterized in**
- **that** the control lever (16) between its hinge points (25, 27) is 0.5 to 2 times as long as the supporting arm (8) between the rolling axis (14) of the other rolling element (22) and the second pivot axis (11);
- **that** a distance of the first hinge point (15) of the control lever (16) to the rolling axis (14) of the other rolling element (22) is 0.5 to 2 times as long as a distance of the second hinge point (27) of the control lever (16) to the second pivot axis (11);
- **that** the supporting arm (8) between the rolling axis (14) of the other rolling element (22) and the second pivot axis (11) is 2 to 5 times as long as the distance of the first hinge point (15) of the control lever (16) to the rolling axis (14) of the other rolling element (22); and
- **that** the control lever (16) between its hinge points (15, 27) is 2 to 5 times as long as the distance of its second hinge point (27) to the second pivot axis (11).

7. Corner cabinet fitting (1) according to any of the claims 3 to 6, **characterized in that** the or a distance of the first hinge point (15) to the rolling axis (14) of the other rolling element (22) is by 50 to 200 % longer than a radius of the other rolling element (22) from its rolling axis (14).

8. Corner cabinet fitting (1) according to any of the precedent claims, **characterized in that** the other rolling element (22) has a by up to 200 % or by 20 to 100 % longer radius from its rolling axis (14) than the one rolling element (24) from the first vertical pivot axis (9).

9. Corner cabinet fitting (1) according to any of the precedent claims, **characterized in that** each of the rolling elements (22, 24) has a constant radius.

10. Corner cabinet fitting (1) according to any of the preceding claims, **characterized in that** the rolling elements (22) are toothed disc segments or gearwheel segments (23, 25).

11. Corner cabinet fitting according to any of the preceding claims, **characterized in that** a linear spring and/or damping device is hinged with its one end to a third hinge point (17) which together with the supporting arm (8) pivots about the first pivot axis (9), and with its other end to a fourth hinge point (19) which together with the other rolling element (22) pivotes about the rolling axis (14) of the other rolling element (22), wherein a distance between the third and the fourth hinge points (17, 19) runs through an extremum during the first pivoting movement.

12. Corner cabinet fitting (1) according to claim 11, **characterized in that** the linear spring and/or damping device is essentially orientated horizontally and together with the other rolling element (22) arranged in a housing attached to the supporting arm (8), wherein, optionally, the third hinge point (17), at least in a pulled-in base position of the corner cabinet fitting (1), is raised or raisable in position by at least 2 mm with regard to the fourth hinge point (19).

13. Corner cabinet fitting (1) according to any of the preceding claims, **characterized in that** the bearing pedestal (7) is mounted to a vertical supporting column (2) and can be clamped to the supporting column (2) at different heights.

14. Corner cabinet fitting (1) according to any of the preceding claims, **characterized in that** the shelf carrier (10) comprises a plurality of shelf rests arranged at a distance with regard to each other, wherein one of the shelf rests is made as a fixed bearing fixed to the shelf carrier (10), and all the other shelf rests are optionally made as floating bearings movable in a longitudinal direction of the shelf carrier (10).

15. Corner cabinet (37) comprising a corner cabinet fitting (1) according to any of the preceding claims and a shelf (34) fastened to the shelf carrier (10) of the corner cabinet fitting (1).

## Revendications

1. Ferrure pour armoire d'angle (1) destinée à supporter de façon mobile une tablette (34) dans une armoire d'angle (37), avec
- un socle de support (7),
- un bras porteur (8) supporté sur le socle de support (7) de façon pivotante dans un premier mouvement pivotant autour d'un premier axe de pivotement (9) vertical,
- un support de tablette (10) supporté sur le bras porteur (8) de façon pivotante dans un deuxième mouvement pivotant autour d'un deuxième axe de pivotement (11) vertical, et
- une transmission qui couple le deuxième mouvement pivotant au premier mouvement pivotant,
**caractérisée en ce que** la transmission comprend deux éléments de roulement (22, 24) qui roulent l'un contre l'autre directement ou avec l'entremise d'une courroie, d'une chaîne ou d'une tige, et dont un élément de roulement (24) est couplé au socle de support (7) et l'autre élément de roulement (22) est couplé au support de tablette (10).

2. Ferrure pour armoire d'angle (1) selon la revendication 1, **caractérisée en ce qu'**un élément de roulement (24) est fixé de façon rigide au socle de support (7) et **en ce que** l'autre élément de roulement (22) est supporté sur le bras porteur (8) de façon pivotante autour d'un axe de roulement (14) vertical.

3. Ferrure pour armoire d'angle (1) selon la revendication 2, **caractérisée en ce qu'**une bielle (16) est articulée par une extrémité de façon pivotante sur un premier point d'articulation (15) qui pivote conjointement avec l'autre élément de roulement (22) autour de son axe de roulement (14) et, par son autre extrémité, est articulée sur un deuxième point d'articulation (27) qui pivote conjointement avec le support de tablette (10) autour du deuxième axe de pivotement (11) vertical.

4. Ferrure pour armoire d'angle (1) selon la revendication 3, **caractérisée en ce que** la bielle (16) croise le bras porteur (8), la bielle (16) s'étendant optionnellement à travers un creux (28) dans le bras porteur (8).

5. Ferrure pour armoire d'angle (1) selon la revendication 4, **caractérisée en ce que** la bielle (16) s'étend à travers un deuxième creux (29) dans une barrette principale (30) du support de tablette (10) en direction du deuxième point d'articulation (27).

6. Ferrure pour armoire d'angle (1) selon l'une des revendications 3 à 5, **caractérisée en ce que**
- la bielle (16) est 0,5 à 2 fois plus longue entre ses points d'articulation (15, 27) que le bras porteur (8) entre l'axe de roulement (14) de l'autre élément de roulement (22) et le deuxième axe de pivotement (11),
- une distance du premier point d'articulation (15) de la bielle (16) à l'axe de roulement (14) de l'autre élément de roulement (22) est 0,5 à 2 fois plus grande qu'une distance du deuxième point d'articulation (27) de la bielle (16) au deuxième axe de pivotement (11),
- le bras porteur (8) est, entre l'axe de roulement (14) de l'autre élément de roulement (22) et le deuxième axe de pivotement (11), 2 à 5 fois plus long que la distance du premier point d'articulation (15) de la bielle (16) à l'axe de roulement (14) de l'autre élément de roulement (22), et
- la bielle (16) est, entre ses points d'articulation (15, 27), 2 à 5 fois plus longue que la distance de son deuxième point d'articulation (27) au deuxième axe de pivotement (11).

7. Ferrure pour armoire d'angle (1) selon l'une des revendications 3 à 6, **caractérisée en ce que** la ou une distance du premier point d'articulation (15) à l'axe de roulement (14) de l'autre élément de roulement (22) est de 50 % à 200 % plus grande qu'un rayon de l'autre élément de roulement (22) autour de son axe de roulement (14).

8. Ferrure pour armoire d'angle (1) selon l'une des revendications précédentes, **caractérisée en ce que** l'autre élément de roulement (22) présente autour de son axe de roulement (14) un rayon jusqu'à 200 % plus grand, ou un rayon de 20 % à 100 % plus grand, que l'élément de roulement (24) autour du premier axe de pivotement (9) vertical.

9. Ferrure pour armoire d'angle (1) selon l'une des revendications précédentes, **caractérisée en ce que** les éléments de roulement (22, 24) présentent respectivement un rayon constant.

10. Ferrure pour armoire d'angle (1) selon l'une des revendications précédentes, **caractérisée en ce que** les éléments de roulement (22) sont des segments de disque denté ou de roue dentée (23, 25).

11. Ferrure pour armoire d'angle (1) selon l'une des revendications précédentes, **caractérisée en ce qu'**un dispositif amortisseur et/ou à ressort linéaire est, par une extrémité, articulé sur un troisième point d'articulation (17) qui est mis en pivotement avec le bras porteur (8) autour du premier axe de pivotement (9) et, par son autre extrémité, est articulé sur un quatrième point d'articulation (19) qui pivote conjointement avec l'autre élément de roulement (22) autour de son axe de roulement (14), dans laquelle une distance couvre un extremum entre le troisième et le quatrième point d'articulation (17, 19) pendant le premier mouvement pivotant.

12. Ferrure pour armoire d'angle (1) selon la revendication 11, **caractérisée en ce que** le dispositif amortisseur et/ou à ressort linéaire est orienté essentiellement horizontalement et est disposé dans un boîtier posé sur le bras porteur (8) conjointement avec l'autre élément de déroulement (22), dans lequel, optionnellement dans au moins une position de base rentrée de la ferrure pour armoire d'angle (1), le troisième point d'articulation (17) est situé 2 mm plus haut, ou peut être relevé pour être au moins 2 mm plus haut, par rapport au quatrième point d'articulation (19).

13. Ferrure pour armoire d'angle (1) selon l'une des revendications précédentes, **caractérisée en ce que** le socle de support (7) est supporté sur une colonne porteuse (2) verticale et peut être bloqué à différentes hauteurs sur la colonne porteuse (2).

14. Ferrure pour armoire d'angle (1) selon l'une des revendications précédentes, **caractérisée en ce que** le support de tablette (10) comporte plusieurs appuis de tablette espacés les uns au-dessous des autres, un des appuis de tablette étant constitué en tant que support fixe stationnaire sur le support de tablette (10) et tous les autres appuis de tablette étant constitués optionnellement en tant que supports libres mobiles dans une direction longitudinale du support de tablette (10).

15. Armoire d'angle (37) avec une ferrure pour armoire d'angle (1) selon l'une des revendications précédentes et avec une tablette (34) fixée sur le support de tablette (10) de la ferrure pour armoire d'angle (1).
